# FASCICULE DE BREVET EUROPEEN

(11) **EP 4 182 199 B1**
(45) Date de publication et mention de la délivrance du brevet: **17.04.2024**
(21) Numéro de dépôt: 21736609.5
(22) Date de dépôt: 29.06.2021
(51) Int. Cl.: B60W 50/14, B60W 30/18, B60W 30/14, B60W 50/00

(54) **SYSTÈME D'ASSISTANCE À LA CONDUITE**
FAHRERASSISTENZSYSTEM
DRIVER ASSISTANCE SYSTEM

(30) Priorité: 20.07.2020 FR 2007573
(43) Date de publication de la demande: 24.05.2023
(73) Titulaire: Ampere SAS, 92100 Boulogne-Billancourt (FR)
(72) Inventeur: GUEYE, Abdou-Salam, 91440 Bures Sur Yvette État (FR); PARIS, Virgile, 75015 Paris État (FR); PAURON, Clément, 78180 Montigny-Le-Bretonneux (FR)
(86) Numéro de dépôt international: PCT/EP2021/067765
(87) Numéro de publication internationale: WO 2022/017734

(56) Documents cités:
- DE-A1-102015 205 371
- DE-A1-102017 102 076
- FR-A1- 3 072 634
- US-A1- 2019 210 604
- US-A1- 2019 322 280
- US-B2- 10 017 172

## Description

La présente invention s'inscrit dans le domaine des systèmes d'assistance à la conduite de véhicule automobile, et concerne plus particulièrement un système d'assistance à la conduite favorisant une conduite éco-responsable de tels véhicules.

Les nouveaux véhicules automobiles, qu'ils soient équipés de moteurs à combustion thermique ou électriques, voire qu'ils consistent en des véhicules à motorisation hybride, sont conçus pour répondre à des exigences écologiques en limitant par exemple au maximum l'émission de gaz à effet de serre, tel que du dioxyde de carbone (CO₂), ou la consommation électrique du véhicule lorsqu'il circule. Toutefois, selon le style de conduite adopté par le conducteur du véhicule, la consommation en carburant et/ou en énergie électrique peut varier sur de larges proportions.

Une conduite est qualifiée communément de « sportive » lorsque le conducteur réalise de fortes accélérations alternées avec d'importants freinages. Un conducteur adoptant ce type de conduite voit la consommation en carburant et/ou en énergie du véhicule augmenter comparativement à une consommation réalisée lors d'une conduite qualifiée plutôt de classique. Ainsi, différents moyens ont été mis en place par les constructeurs automobiles pour influencer la conduite adoptée par le conducteur et diminuer sa consommation en carburant et/ou en énergie.

Certains véhicules proposent de fournir au conducteur des indications sur la consommation en carburant et/ou en énergie. Ce type d'indication permet au conducteur d'adapter sa conduite en fonction de la consommation en carburant et/ou en énergie qu'il souhaite réaliser. Ainsi, dans certains véhicules, le conducteur peut connaître sa consommation instantanée et sa consommation moyenne. La consommation instantanée est calculée en fonction de la quantité de carburant instantanée consommée et de la vitesse actuelle du véhicule. Une consommation par exemple en litres par cent kilomètres, ou en litre par heure, en est alors déduite et peut s'afficher au conducteur. Dans d'autres véhicules, une consommation moyenne est quant à elle calculée en fonction de la quantité de carburant consommée et de la distance parcourue depuis la dernière mise à zéro du système.

Certains véhicules sont quant à eux équipés de systèmes d'assistance à la conduite guidant plus spécifiquement la conduite du conducteur vers une conduite éco-responsable. Ainsi, le système d'assistance à la conduite peut par exemple proposer au conducteur d'adopter des gestes pouvant réduire sa consommation en carburant et/ou en énergie.

Il est connu qu'un système d'assistance à la conduite soit couplé à un système de navigation du véhicule pour pouvoir anticiper et prévoir un enchaînement d'actions à réaliser par le conducteur sur le trajet prédéfini par le système de navigation dans l'objectif que le conducteur adopte une conduite éco-responsable. Pour cela, le système d'assistance à la conduite peut calculer, par exemple, une force d'accélération que le conducteur doit produire en fonction des données issues du système de navigation et/ou une distance de décélération permettant de diminuer fortement la consommation en carburant lorsqu'un ralentissement sans freinage est possible.

US 2019/322280 A1 divulgue un procédé permettant de fournir des informations de conduite par inertie pour effectuer une conduite par inertie d'un véhicule. Le procédé consiste à reconnaître une position cible, dans laquelle une décélération est requise à partir d'une vitesse actuelle du véhicule, en tant qu'événement de conduite par inertie sur un itinéraire de conduite du véhicule, lorsqu'une pluralité d'événements de conduite par inertie sont reconnus. Le procédé détermine une priorité par rapport à chacun de la pluralité d'événements de conduite par inertie, et une position de début de conduite par inertie requise pour atteindre, à une vitesse cible, une position cible d'un événement de conduite par inertie ayant une priorité élevée. Des informations sur une position de démarrage de conduite à inertie sont fournies au conducteur.

FR3072634 A1 divulgue un procédé d'assistance à la conduite d'un véhicule automobile comprenant une étape de détection d'une pluralité d'événements routier à venir simultanés et/ou consécutifs et une étape de discrimination desdits événements de sorte à définir un ordre de priorité parmi lesdits événements .

Dans ce contexte, l'invention propose un système d'assistance à la conduite d'un véhicule automobile, caractérisé en ce qu'il comprend au moins un système de récupération de données de navigation, une interface de compilation configurée pour créer au moins une suite d'évènements à partir des données de navigation récupérées et un calculateur de distance d'alerte au conducteur, cette distance d'alerte au conducteur étant calculée pour chacun des événements de chaque suite d'événements créée en fonction d'au moins une distance de décélération naturelle du véhicule propre à chaque évènement, ledit système d'assistance à la conduite comportant en outre une interface de gestion déterminant une priorité entre les événements de chaque suite d'évènements selon la distance d'alerte au conducteur calculée pour chaque événement.

Le système d'assistance à la conduite permet de calculer une distance de décélération naturelle du véhicule durant laquelle le conducteur est amené à lever le pied de la pédale d'accélération du véhicule pour entraîner le véhicule à ralentir naturellement en vue d'un évènement présent sur l'itinéraire.

Un système de navigation définit un itinéraire que doit emprunter un véhicule pour que le conducteur de ce véhicule atteigne une destination choisie. Le système de récupération des données de navigation du système d'assistance à la conduite communique avec le système de navigation pour récupérer les données de navigation concernant l'itinéraire choisi par ledit système de navigation.

Le système de récupération des données de navigation transmet ensuite ces données de navigation à l'interface de compilation, ce dernier créant au moins une suite d'évènements à partir de ces données de navigation. Chaque évènement correspond à une étape de l'itinéraire et/ou une modification de la vitesse du véhicule, comme par exemple un rond-point ou une sortie de voie présent sur l'itinéraire. Une suite d'évènements correspond à une liste d'évènements susceptibles d'apparaître sur l'itinéraire indiqué par le système de navigation.

Le calculateur du système d'assistance à la conduite calcule pour chaque évènement une distance d'alerte au conducteur. Cette distance d'alerte au conducteur correspond à la distance entre l'évènement et la position du véhicule au moment où le conducteur est informé qu'il doit lever le pied de la pédale d'accélération du véhicule pour produire au moins via un ralentissement naturel du véhicule, sans action spécifique sur une pédale de frein, le ralentissement nécessaire pour atteindre une vitesse cible à laquelle le véhicule doit circuler au moins au début de l'évènement.

L'interface de gestion organise ensuite la suite d'évènements, en priorisant les évènements les uns par rapport aux autres au sein de la suite d'évènements au moins selon leur distance d'alerte au conducteur, en mettant en avant, par exemple, l'évènement dont la distance d'alerte au conducteur est la plus proche de la position du véhicule et non l'évènement le plus proche de la position du véhicule.

On peut illustrer ce qui vient d'être expliqué, et notamment la notion de priorisation des événements, par le cas pratique suivant : une suite d'évènements comprend au moins un premier évènement, situé à l'instant T à mille mètres (1000m) de la position du véhicule, et un deuxième évènement, situé au même instant T à mille trois cents mètres (1300m) de la position du véhicule. Le calculateur du système d'assistance à la conduite a calculé pour le premier évènement une première distance d'alerte au conducteur de trois cents mètres (300m), ce qui signifie qu'une alerte est envoyée au conducteur lorsque le véhicule est à trois cent mètres du premier évènement, et pour le deuxième évènement une deuxième distance d'alerte au conducteur de sept cents mètres (700m), ce qui signifie qu'une alerte est envoyée au conducteur lorsque le véhicule est à sept cent mètres du deuxième évènement. La différence entre les distances d'alerte peut notamment s'expliquer dans le fait que le premier évènement consiste ici en une grande courbe dans laquelle la vitesse du véhicule doit être faiblement baissée tandis que le deuxième évènement consiste ici en un stop où le véhicule doit s'arrêter. A l'instant T, il reste encore sept cents mètres (700m) de roulage au véhicule avant que le véhicule rencontre la zone de déclenchement de la première distance d'alerte et que le conducteur ne reçoive la première alerte correspondant à la première distance d'alerte, tandis qu'il reste six cents mètres (600m) de roulage au véhicule avant que le véhicule rencontre la zone de déclenchement de la deuxième distance d'alerte et que le conducteur ne reçoive la deuxième alerte correspondant à la deuxième distance d'alerte. Le véhicule étant ainsi plus proche de la zone de déclenchement de la deuxième distance d'alerte au conducteur correspondant au deuxième évènement que de la zone de déclenchement de la première distance d'alerte au conducteur correspondant au premier évènement, l'interface de gestion priorisera le deuxième évènement par rapport au premier évènement, en positionnant le deuxième évènement avant le premier évènement dans la suite d'évènements.

Selon une caractéristique optionnelle de l'invention, le système des données de navigation est configuré pour communiquer avec un système de navigation du véhicule et/ou un système de navigation d'un appareil portatif.

Le système de navigation d'un appareil portatif peut être par exemple une application, le cas échéant téléchargée, d'un appareil connecté et portatif, tel qu'un téléphone portable, cette application étant configurée à utiliser la géolocalisation du véhicule pour calculer un itinéraire pour que le véhicule puisse atteindre une destination choisie par le conducteur du véhicule.

Selon une autre caractéristique optionnelle de l'invention, la distance d'alerte au conducteur de chaque événement est calculée par le calculateur en additionnant au moins la distance de décélération naturelle, une distance de freinage et une distance de réaction du conducteur, chacune de ces distances étant associée à chaque évènement de la suite d'évènements par l'interface de compilation.

Tel que cela a été précisé précédemment, la distance de décélération naturelle correspond à la distance durant laquelle le véhicule est en roue libre, le conducteur ayant relevé le pied de la pédale d'accélération du véhicule et n'ayant pas encore besoin d'actionner la pédale de frein du véhicule.

La distance de freinage correspond à la distance durant laquelle le conducteur utilise la pédale de frein du véhicule.

La distance de réaction correspond à la distance entre la position du véhicule au moment où le système d'assistance à la conduite informe le conducteur de l'entrée dans une distance de décélération et la position du véhicule au moment où le conducteur réagit à cette information.

Selon une autre caractéristique optionnelle de l'invention, le calculateur intègre au moins une donnée relative au dénivelé présent sur l'itinéraire choisi par un système de navigation, un facteur de dégradation de l'adhérence des pneus sur le sol, la vitesse effective du véhicule, les conditions météorologiques et/ou la charge du véhicule pour adapter en conséquence la distance d'alerte au conducteur de chaque évènement.

Selon une autre caractéristique optionnelle de l'invention, le calculateur intègre au moins une donnée relative à la circulation en temps réel du véhicule pour adapter en conséquence la distance d'alerte au conducteur de chaque évènement.

Selon une autre caractéristique optionnelle de l'invention, le système d'assistance est équipé d'un dispositif de calcul des situations de surconsommation du véhicule configuré pour déterminer une valeur de surconsommation à chaque évènement.

Selon une autre caractéristique optionnelle de l'invention, la valeur de surconsommation est apte à prendre soit une première valeur non nulle lorsque la distance d'alerte est supérieure ou égale à une distance entre la position du véhicule et l'événement en approche et lorsque la distance de décélération est non nulle, soit une deuxième valeur nulle lorsque la distance d'alerte est inférieure à une distance entre le véhicule et l'événement en approche et/ou lorsque la distance de décélération est nulle.

Selon une autre caractéristique optionnelle de l'invention, l'interface de gestion est configurée pour prioriser chacun des événements de la suite d'événements générée selon leur distance d'alerte au conducteur et selon leur valeur de surconsommation.

Selon une autre caractéristique optionnelle de l'invention, un évènement est priorisé par l'interface de gestion lorsque la distance d'alerte au conducteur est la plus proche de la position du véhicule et lorsque sa valeur de surconsommation est non nulle.

Selon une autre caractéristique optionnelle de l'invention, le système d'assistance à la conduite comprend un moyen d'alerte de la distance d'alerte au conducteur et/ou un dispositif d'affichage de la distance d'alerte au conducteur et/ou un moyen de communication de la distance d'alerte avec un dispositif d'affichage du véhicule.

L'invention a également pour objet un véhicule autonome ou semi-autonome comprenant un système d'assistance à la conduite selon l'une quelconque des revendications précédentes et un module de contrôle du pilotage du véhicule étant apte à émettre des instructions de commande de décélération du véhicule, ledit système d'assistance comprenant un dispositif de communication configuré pour émettre une information en direction du module de contrôle de pilotage.

L'invention concerne également un procédé d'assistance à la conduite optimisant la consommation d'énergie électrique et/ou thermique d'un véhicule, durant lequel une distance d'alerte au conducteur pour chaque événement d'une suite d'événements est calculée par un système d'assistance à la conduite selon l'une quelconque des revendications précédentes à partir des données de navigation d'un système de navigation puis transmise au conducteur pour l'inciter à décélérer selon les événements présents sur l'itinéraire et optimiser la consommation en énergie du véhicule, l'interface de gestion priorisant chaque événement selon leur distance d'alerte.

Il convient de comprendre que l'interface de gestion priorise les évènements au sein d'une suite d'évènements donnée dans la mesure où elle ne prend pas uniquement en compte l'occurrence de chacun des évènements par rapport à la position géographique du véhicule pour les ordonner et dans la mesure où elle peut modifier l'ordre de prise en compte des évènements par rapport à cette occurrence en considérant en priorité un évènement si la distance d'alerte au conducteur associée est telle que la zone de déclenchement de cette distance d'alerte est la plus proche de la position du véhicule comparativement aux zones de déclenchement des distances d'alerte au conducteur associées aux autres évènements de la suite d'évènement.

Selon une autre caractéristique de l'invention, le procédé d'assistance à la conduite comprend une première étape durant laquelle le système de récupération des données communique avec le système de navigation pour récupérer des données de navigation, puis transmet ces données de navigation à l'interface de compilation pour qu'il crée au moins une suite d'événements à partir des données de navigation issues du système de navigation.

Selon une autre caractéristique de l'invention, le procédé d'assistance à la conduite comprend une deuxième étape durant laquelle le calculateur détermine une distance d'alerte au conducteur pour chacun des événements de la suite d'événements créée par l'interface de compilation.

Selon une autre caractéristique optionnelle de l'invention, durant la deuxième étape, le calculateur détermine d'abord une distance de décélération, une distance de freinage et une distance de décélération pour chacun des événements, puis calcule ensuite la distance d'alerte au conducteur à partir des distances de décélération, de freinage et de réaction de chacun des évènements de la suite d'évènements.

Selon une autre caractéristique de l'invention, le procédé d'assistance à la conduite comprend une troisième étape durant laquelle un dispositif de calcul des situations de surconsommation du véhicule du système d'assistance à la conduite détermine une valeur de surconsommation pour chaque évènement, l'interface de gestion priorisant ensuite chaque évènement selon leur distance d'alerte au conducteur et leur valeur de surconsommation.

Selon une autre caractéristique de l'invention, le procédé d'assistance à la conduite comprend une quatrième étape durant laquelle le système d'assistance à la conduite informe le conducteur pour qu'il décélère lorsqu'une décélération est nécessaire.

Selon une autre caractéristique de l'invention, le procédé d'assistance à la conduite comprend une quatrième étape alternative durant laquelle un dispositif de communication du système d'assistance à la conduite équipant un véhicule autonome ou semi-autonome communique avec un module de contrôle du pilotage du véhicule autonome ou semi-autonome configuré pour émettre une instruction de commande de décélération au véhicule autonome ou semi-autonome.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] est une représentation schématique d'un véhicule équipé d'un système d'assistance à la conduite selon l'invention ;
[Fig. 2] est un logigramme illustrant la création d'au moins une suite d'évènements par une interface de compilation du système d'assistance à la conduite illustrée sur la figure 1 ;
[Fig. 3] est une représentation schématique d'une configuration de chaînes d'évènements générées par l'algorithme associées à l'interface de compilation du système d'assistance à la conduite ;
[Fig. 4] est un logigramme illustrant une priorisation des événements réalisée par une interface de gestion du système d'assistance à la conduite selon la figure 1 ;
[Fig. 5] est une représentation schématique d'un cas pratique d'un véhicule équipé d'un système d'assistance à la conduite selon l'invention et amené à rencontrer trois évènements successifs sur son itinéraire, ces évènements étant priorisés conformément au logigramme de la figure 4.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

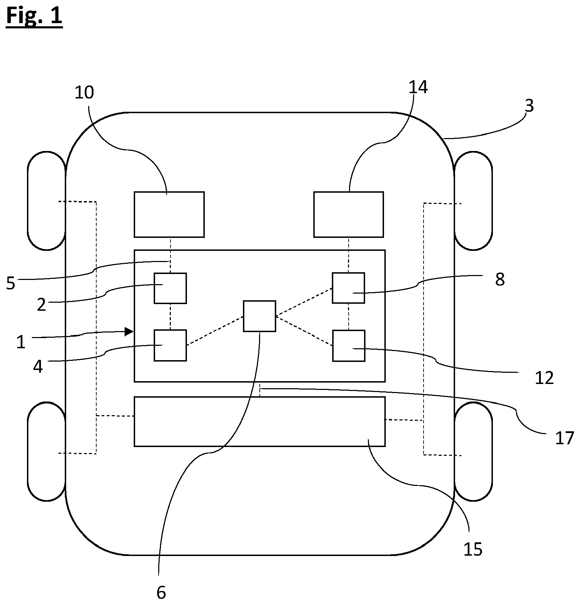

Tel qu'illustré sur la figure 1, un système d'assistance à la conduite 1 selon l'invention est embarqué sur un véhicule 3 et comprend au moins un système de récupération 2 de données brutes de navigation, une interface de compilation 4 configurée pour créer au moins une suite d'évènements à partir des données brutes de navigation récupérées, un calculateur 6 de distance d'alerte au conducteur et, selon l'invention, une interface de gestion 8 déterminant une priorité pour chacun des évènements générés par l'interface de compilation 4 selon la distance d'alerte au conducteur calculée pour chaque évènement.

Le système d'assistance à la conduite 1 crée ainsi une suite d'évènements à partir de données brutes de navigation d'un système de navigation 10. Ce système de navigation 10 est, par exemple, un programme déterminant un itinéraire qu'un véhicule doit emprunter pour atteindre une destination choisie par le conducteur du véhicule 3 depuis une position du véhicule. Généralement, le système de navigation 10 calcule une pluralité d'itinéraires que le véhicule 3 peut emprunter et détermine l'itinéraire le plus rapide, c'est-à-dire l'itinéraire dont le temps de trajet est le plus court, et/ou l'itinéraire le plus court, c'est-à-dire l'itinéraire dont la distance à parcourir est la plus courte, selon le choix du conducteur. Le système de navigation 10 peut intégrer d'autres paramètres tels que la densité de véhicules présents sur le trajet, les éventuels travaux présents sur les voies de circulation ou encore la présence de voies à accès payant, telle que la présence de péages par exemple.

L'itinéraire choisi par le système de navigation 10 est composé d'une succession de données brutes de navigation. Le système de récupération 2 du système d'assistance à la conduite 1 comprend des moyens de communication 5 configurés pour communiquer avec le système de navigation 10, de manière à extraire ces données brutes de navigation dudit système de navigation 10 pour les transmettre ensuite à l'interface de compilation 4. De plus, le système de récupération 2 peut comprendre également des moyens de décodage des données brutes de navigation. Ces moyens de décodage traitent ces données brutes de navigation une fois que le système de récupération 2 les a extraites du système de navigation 10. Le système de récupération 2 peut comprendre en outre des moyens de stockage des différentes données traitées par le système de récupération 2 à partir des données brutes de navigation.

Le système de navigation 10 comprend généralement un protocole spécifique configuré pour classer les données brutes de navigations avant leur extraction par le système de récupération. Les données brutes de navigation sont catégorisées en six catégories, chacune de ces catégories étant issue d'un protocole spécifique, tel que par exemple le protocole « Advanced Driver Assistance System Interface Spécifications » en anglais, ou ADASIS.

Une première catégorie correspond aux données de type « message position » et sont relatives aux données concernant la position du véhicule. Une deuxième catégorie correspond aux données de type « message stub » et sont relatives aux données concernant le début d'une nouvelle voie et/ou d'un nouvel itinéraire que doit emprunter le véhicule. Une troisième catégorie correspond aux données de type « message profile short » et sont relatives aux données concernant un fait présent sur une voie et/ou sur un itinéraire que doit emprunter le véhicule et qui nécessitent un stockage de maximum 10 bits, le fait pouvant être par exemple un objet et/ou une personne présents sur la route. Une quatrième catégorie correspond aux données de type « message profile long » et sont relatives aux données concernant un fait présent sur une voie et/ou sur un itinéraire que doit emprunter le véhicule et qui nécessitent un stockage de maximum 32 bits. Une cinquième catégorie correspond aux données de type « message segment » et sont relatives aux données concernant les différents types de segment composant la voie. Une sixième et dernière catégorie correspond aux données de type « message Meta-data » et sont relatives aux données concernant des faits d'ordre général, tels que les pays traversés par l'itinéraire, l'unité de vitesse ou encore la version de la carte.

Les moyens de décodage du système de récupération 2 sont configurés pour décoder spécifiquement chacune des données brutes de navigation selon la catégorie dont elles sont issues. Ainsi, une donnée brute de navigation issue de la deuxième catégorie correspondant aux données de type « message stub » sera décodée différemment par la fonction de décodage du système de récupération 2 par rapport à une donnée brute de navigation extraite issue d'une autre catégorie.

Une fois ces données brutes de navigation traitées par ces moyens de décodage, le système de récupération 2 envoie ces données traitées à l'interface de compilation 4 pour que ce dernier crée une suite d'événements à partir des données traitées.

Pour un itinéraire emprunté par le véhicule, un évènement correspond à une étape de l'itinéraire et/ou une modification de la vitesse que doit effectuer le véhicule 3 sur l'itinéraire emprunté. Pour chaque événement, l'interface de compilation 4 associe des données traitées, l'ensemble de ces informations étant considéré par la suite par le calculateur pour définir une stratégie de pilotage participant à aider le conducteur à réduire sa consommation en carburant.

Les données traitées reçues par l'interface de compilation 4 sont classées selon cinq groupes : un premier groupe relatif aux caractéristiques des faits pris en compte, un deuxième groupe concentrant les données informatives sur les pentes présentes sur l'itinéraire emprunté par le véhicule, un troisième groupe comprenant les données traitées provenant de la sixième catégorie des données brutes de navigation correspondant aux données brutes de navigation de type « message Meta-data », un quatrième groupe correspondant aux données traitées relatives uniquement à l'itinéraire choisi comme celui sur lequel doit circuler le véhicule, et un cinquième groupe réunissant les informations sur l'environnement entourant le véhicule et l'itinéraire choisi.

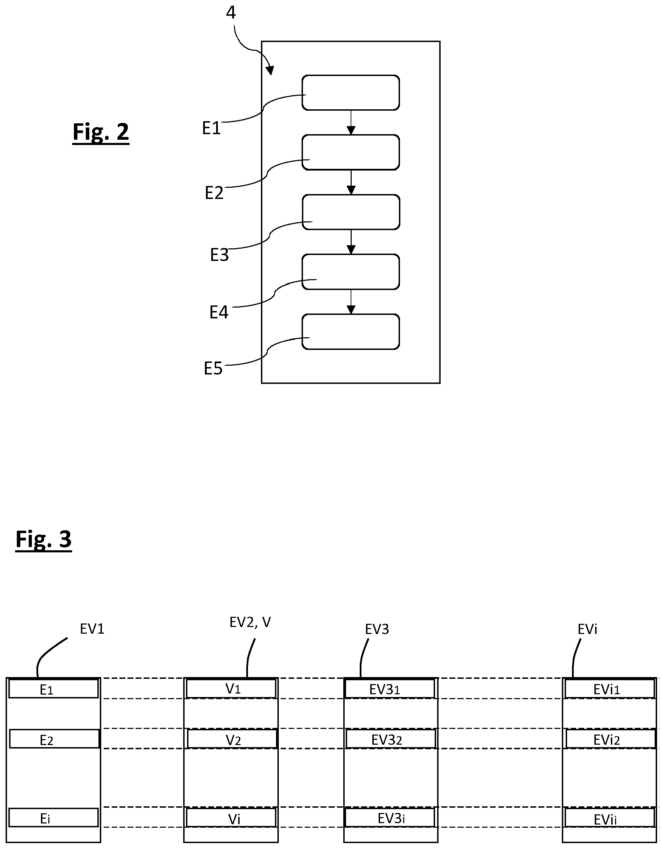

L'interface de compilation 4 est configurée pour créer au moins une suite d'événements à partir des données traitées par le système de récupération 2, comme plus particulièrement illustré sur la figure 2. Chaque évènement de la suite d'évènements est une association de différentes données traitées, l'interface de compilation 4 organisant chacun de ces évènements le long d'un itinéraire spécifique, correspondant à l'itinéraire choisi principal, par ordre d'apparition sur le trajet du véhicule.

L'interface de compilation 4 trie chacun des évènements de la suite d'évènements en fonction de leur occurrence par rapport à la position du véhicule 3. En d'autres termes, le positionnement d'un évènement est déterminé par rapport à la distance relative entre le véhicule 3 et l'événement. Plus particulièrement, les données traitées apparaissant en premier dans une suite d'événements correspondent aux données traitées du premier événement que va rencontrer le véhicule 3 selon l'itinéraire choisi, correspondant à ladite suite d'évènements. Les données traitées apparaissant en deuxième dans cette même suite d'événements correspondent aux données traitées du deuxième événement que va rencontrer le véhicule s'il reste sur l'itinéraire choisi. Chaque événement au sein de la suite d'événements est ainsi classé selon son ordre d'apparition sur l'itinéraire défini pour le véhicule, si celui-ci reste sur l'itinéraire.

Les données traitées assignées à chaque évènement correspondent au moins à la distance entre l'évènement et la position du véhicule, et peuvent varier en fonction du type d'évènements créés par l'interface de compilation 4. L'évènement calculé peut être de type « virage ». Ce type d'évènements regroupe par exemple les données concernant par exemple le type de virage, c'est-à-dire si le virage est orienté vers la droite ou vers la gauche de la trajectoire, le rayon formé par le virage, la longueur du virage, et/ou encore la limitation de vitesse au début, pendant et/ou après le virage.

L'évènement calculé peut être de type « limitation de vitesse ». Ce type d'évènement regroupe par exemple la limitation de vitesse avant, pendant et/ou après un évènement.

L'évènement calculé peut être de type « sortie de voie ». Ce type d'évènement regroupe par exemple le rayon du virage de sortie lorsque la sortie de voie présente un virage, la limitation de vitesse avant, pendant et/ou après la sortie de voie, et/ou la présence d'une contrainte de priorité comme la présence d'un panneau de signalisation « stop » ou « cédez le passage ».

L'évènement calculé peut être de type « rond-point ». Ce type d'évènement regroupe par exemple le rayon du rond-point, la limitation de vitesse avant, pendant et/ou après le rond-point.

L'évènement calculé peut être de type « péage ». Ce type d'évènement regroupe par exemple la détection de cabine de péage sur l'itinéraire emprunté, le type de péage, et/ou encore la limitation de vitesse avant, pendant et/ou après le péage.

L'évènement calculé peut également être de type « stop » ou de type « cédez le passage ». Ce type d'évènement regroupe par exemple la limitation de vitesse avant, pendant et/ou après le panneau.

L'évènement calculé peut encore être de type « pente ». Ce type d'évènement regroupe par exemple la détection la valeur d'inclinaison de cette pente, assimilable à un dénivelé, la limitation de vitesse avant, pendant et/ou après la pente et/ou la côte, et/ou encore la distance entre le véhicule et la pente et/ou la côte.

Lorsque le système d'assistance à la conduite reçoit au moins une donnée relative à la circulation en temps réel du véhicule, l'évènement calculé peut être de type « embouteillage » et/ou « zone de travaux ». Ce type d'évènement regroupe par exemple la détection d'un embouteillage et/ou d'une zone de travaux sur l'itinéraire emprunté, la limitation de vitesse avant, pendant et/ou après l'embouteillage et/ou la zone de travaux, et/ou la distance entre le véhicule et l'embouteillage et/ou la zone de travaux. Les suites d'événements telle qu'elles ont été évoquées précédemment sont créées et traitées via un algorithme tel qu'illustré à titre d'exemple sur les figures 2 et 3.

L'algorithme commence par une première période S1 au cours de laquelle les évènements sont filtrés par type d'évènement, certains de ces événements, et par exemple les événements de type « sortie de voie », n'étant pas considérés par la suite, notamment lorsque ces évènements ne génèrent pas un changement de vitesse notable du véhicule. On comprend par « filtrés » que les évènements de type « sortie de voie » ne sont plus pris en compte dans la suite de l'algorithme.

Durant une deuxième période S2, et tel que cela est une première chaîne d'évènements Ev1 est créée par l'algorithme en classant les différents évènements (E₁, E₂... Eᵢ) les uns après les autres en fonction de leur apparition sur l'itinéraire. L'algorithme trie alors l'ensemble des données traitées pour les classer, dans des chaînes calquées sur la première chaine d'évènements, selon le type des données à associer à chaque évènement. En d'autres termes, on associe différents attributs, c'est-à-dire différentes données traitées, à un évènement et on classe les données traitées, par attributs, en fonction de leur apparition sur l'itinéraire. A titre d'exemple, ces attributs peuvent consister en un type d'évènement, une vitesse de passage, ou une distance de freinage, à respecter par le véhicule pour le type évènement correspondant. L'ensemble des données traitées relatives à un attribut en particulier forment une chaine d'évènements (EV2, EV3, EVi) de forme semblable à la première chaîne d'évènements précédemment évoquées, et au sein de laquelle l'ordre d'apparition des attributs est lié à l'ordre d'apparition des évènements dans la première chaine d'évènement. Par exemple, les données traitées concernant l'ensemble des vitesses à respecter par un véhicule en fonction des évènements que le véhicule va rencontrer le long de l'itinéraire sont regroupées, pour former la deuxième chaîne d'évènements EV2, sous la forme d'un vecteur de vitesse V (Vi, V₂, ..., Vi) où Vi représente un attribut relatif à une première vitesse à respecter pour le premier évènement E₁, V₂ représente un attribut relatif à une deuxième vitesse à respecter pour le deuxième évènement E₂ et Vᵢ représente un attribut relatif à une i-ième vitesse à respecter pour le i-ième évènement E; que le véhicule doit rencontrer sur l'itinéraire.

L'algorithme est configuré pour pouvoir considérer plusieurs chaînes d'évènements sous forme de vecteurs chacun représentatif des attributs à associer à un évènement. Tel que cela est visible sur la figure 3, une donnée traitée d'un vecteur d'attribut correspond à un évènement et chaque évènement se voit associer à une série d'attributs. A titre d'exemple non limitatif, il a été illustré sur cette figure deux autres vecteurs d'attribut EV3, EVi, dans lesquels sont respectivement porter les données traitées (EV3₁, EV3₂..EV3ᵢ ; EVi₁, EVi₂..EViᵢ) correspondant à cet attribut, de sorte que chaque évènement se voit associer une pluralité d'attributs. Ainsi, selon cet exemple illustré, un deuxième évènement E₂ de la première chaine d'évènement EV1 se voit associer l'ensemble des attributs présents sur la ligne correspondante de la matrice ainsi formée, à savoir un premier attribut V₂, un deuxième attribut EV3₂ et un troisième attribut EVi₂.

Il convient de noter que lorsque deux ou plusieurs évènements de la suite d'évènements sont suffisamment proches les uns des autres, ils peuvent être regroupés pour former au sein de la suite d'évènements une succession d'évènements, auquel l'algorithme, lors d'une troisième période S3, regroupe les données traitées formant la succession d'évènements en une donnée traitée principale pour chaque vecteur d'attribut.

Ensuite, le programme organise l'ensemble des évènements de la suite d'évènements durant une quatrième période S4 en triant chacun des évènements par rapport à leur occurrence avec la position du véhicule, c'est-à-dire par rapport à l'ordre de rencontre du véhicule avec les évènements sur l'itinéraire emprunté tel que décrit ci-dessus.

Au cours de ces différentes périodes, l'interface de compilation 4 reçoit pour chaque évènement tout d'abord son type, c'est-à-dire si l'évènement est par exemple de type « virage », « rond-point » ou d'un autre type. L'interface de compilation 4 reçoit ensuite la distance séparant l'évènement du véhicule, et/ou les données traitées relatives à la limitation de vitesse avant, pendant et/ou après l'évènement, à intervalle de temps constant par exemple à chaque seconde.

Le système d'assistance à la conduite selon l'invention est configuré pour prendre en considération, dans les données traitées, les pentes présentes sur l'itinéraire. Dans les données brutes récupérées du système de navigation, les valeurs des dénivelés sont attribuées à des points précis sur l'itinéraire choisi. Le système d'assistance peut être configuré pour qu'au moins un de ces modules puisse réaliser une interpolation pour calculer les valeurs de dénivelés à des points intermédiaires, entre la position du véhicule à un instant donné et les évènements identifiés sur l'itinéraire que le véhicule emprunte.

L'interface de compilation 4 réalise une mise à jour en temps réel des données traitées relatives à la vitesse du véhicule et à la distance entre le véhicule et chacun des évènements de la suite d'évènements selon un intervalle de temps constant. Ces mises à jour régulières des données traitées entraînent une mise à jour des vecteurs d'attribut formant la suite d'évènements.

La matrice correspondant à la suite d'évènements est ainsi régulièrement mise à jour, et notamment par un effacement du données traitées correspondant à un évènement que le véhicule a dépassé, c'est dire lorsque le véhicule roule sur une portion de l'itinéraire située après ledit évènement.

Une fois la création d'au moins une suite d'évènements effectuée par l'interface de compilation 4 et de la matrice correspondante, cette matrice est transmise au calculateur 6 de distances d'alerte au conducteur.

La distance d'alerte au conducteur calculée par ce calculateur 6 consiste au moins en la somme de trois distances qui sont la distance de décélération, la distance de freinage et la distance de réaction, la distance d'alerte au conducteur correspondant à la distance susceptible d'être parcourue par le véhicule dans des conditions de freinage optimales, notamment d'un point de vue de la consommation, en amont d'un évènement pour atteindre une vitesse cible associée à l'évènement. Cette vitesse cible correspond plus particulièrement à la vitesse à laquelle le véhicule doit circuler lorsqu'il atteint l'évènement pour garantir des conditions de circulation sécurisées.

La distance de décélération correspond à la distance durant laquelle le véhicule perd de la vitesse uniquement via sa décélération naturelle due aux forces de frottement, lorsque le conducteur lève le pied de la pédale d'accélération du véhicule. Cette décélération naturelle est due aux différents efforts s'appliquant sur le véhicule et s'opposant à son mouvement, tels que par exemple les efforts de traînée aérodynamique, les forces de frottement des composants pneumatiques sur la surface de la route et/ou encore les efforts gravitationnels qui s'exercent dans le cas où le véhicule roule sur une pente. La distance de décélération s'étend entre une première position du véhicule sur la route au moment où le conducteur doit lever le pied de la pédale d'accélération pour produire une décélération naturelle du véhicule et une deuxième position du véhicule sur la route au moment où le véhicule atteint la vitesse cible, ou au moment où le conducteur utilise la pédale de frein lorsqu'un freinage actif est nécessaire pour diminuer suffisamment la vitesse du véhicule.

La distance de freinage, lorsqu'un freinage actif est nécessaire, est la distance parcourue par le véhicule lorsque le conducteur freine, en appuyant notamment sur la pédale de frein du véhicule, pour atteindre plus facilement une vitesse cible. La distance de freinage s'étend entre la position du véhicule au moment où le conducteur agit sur la pédale de frein et la position du véhicule au moment où le véhicule atteint la vitesse cible.

La distance de réaction est quant à elle la distance parcourue par le véhicule entre la position du véhicule au moment où le conducteur est alerté par le système d'assistance à la conduite d'une zone de décélération et la position du véhicule au moment où le conducteur réagit à cette alerte et commence à lever le pied de la pédale d'accélérateur. Cette distance est calculée à partir d'un temps de réaction moyen d'un conducteur, comme par exemple une seconde, et de la vitesse effective du véhicule.

Le calculateur de distances d'alerte au conducteur calcule puis associe à chaque évènement de la suite d'évènements une distance d'alerte au conducteur, cette dernière correspondant à la distance entre l'évènement et la position du véhicule au moment où le conducteur doit être alerté par le système d'assistance à la conduite de la possibilité de décélérer en levant le pied de la pédale d'accélération du véhicule.

Pour calculer cette distance d'alerte au conducteur, le calculateur de distances d'alerte au conducteur réalise une succession de différentes phases. Ces différentes phases sont ajustées en temps réel par rapport à la conduite du véhicule, en prenant notamment en compte la vitesse effective du véhicule, c'est-à-dire la vitesse à laquelle circule le véhicule. Ainsi, le calculateur de distances d'alerte au conducteur calcule de façon périodique, et donc selon un intervalle de temps régulier, la distance d'alerte au conducteur pour chaque évènement, en ajustant ces calculs au déplacement du véhicule sur l'itinéraire emprunté.

Le calculateur de distances d'alerte au conducteur calcule une distance de décélération du véhicule pour chaque évènement. Pour cela, le calculateur considère pour chaque évènement la vitesse cible, c'est-à-dire la vitesse à atteindre par le véhicule afin qu'il puisse franchir l'obstacle en toute sécurité, et la position sur la route de l'évènement, et notamment la distance entre le véhicule et cet évènement. Le calculateur 6 définit également des blocs de distance de décélération, spécifiques au véhicule et par exemple à sa masse, dont il va se servir pour calculer la distance d'alerte. Ces blocs de distance de décélération, pouvant par exemple être d'une valeur égale à un mètre, sont associés à une variation de vitesse du véhicule en entrée et en sortie desdits blocs de distance. En d'autres termes, le calculateur 6 est configuré pour déterminer à quelle vitesse doit rouler le véhicule en entrée d'un bloc de distance de décélération pour atteindre une vitesse souhaitée en sortie de ce bloc de distance. De proche en proche, en partant de la vitesse cible de l'évènement, le calculateur 6 détermine le nombre de blocs de distances de décélération nécessaires pour que le véhicule puisse atteindre la vitesse cible de l'évènement en partant d'une vitesse égale à la vitesse effective du véhicule. La distance de décélération de l'évènement telle qu'elle a été évoquée précédemment correspond à la somme des blocs de distance de décélération estimés nécessaires par le calculateur.

Le calculateur de distances d'alerte au conducteur prend également en compte la valeur de la pente sur laquelle le véhicule roule, pour chaque bloc de distance de décélération. La vitesse du véhicule à respecter en entrée du bloc de distance décélération pour atteindre la vitesse souhaitée en sortie est diminuée ou augmentée en fonction de la pente. Plus particulièrement, cette vitesse en entrée du bloc de distance de décélération est augmentée lorsque la portion de l'itinéraire correspondant présente un dénivelé positif, comme la présence d'une côte par exemple, puisque le véhicule va connaître une décélération naturelle plus forte du fait de la montée. Inversement, la vitesse en entrée du bloc de distance de décélération est diminuée lorsque la portion de l'itinéraire correspondant audit bloc de distance de décélération présente un dénivelé négatif, comme la présence d'une pente par exemple.

Le calculateur calcule ainsi, pour chaque évènement, notamment dans le but de prioriser les évènements les uns par rapport aux autres dans une même suite d'évènements, une distance de décélération correspondant ainsi à la distance durant laquelle le conducteur doit lever le pied pour atteindre la vitesse cible attribuée à l'évènement.

Le calculateur peut, lorsque c'est nécessaire, définir une distance de freinage de sorte que le freinage soit confortable pour le conducteur, et les passagers du véhicule lorsqu'il y en a. Pour cela, le calculateur prend en considération la vitesse à laquelle circule le véhicule en début de phase de freinage. Cette distance de freinage peut être définie comme nulle lorsque le conducteur n'a pas besoin de freiner en appuyant sur la pédale de freinage et que seule la décélération naturelle du véhicule peut suffire par exemple.

Le calcul de la distance d'alerte au conducteur peut également prendre en compte un facteur de correction appliqué au calcul et augmentant ainsi la distance d'alerte au conducteur estimée selon certains cas, comme par exemple lorsque la surface de la route sur laquelle circule le véhicule est mouillée voire glissante.

Tel qu'évoqué précédemment, le calculateur calcule une distance d'alerte au conducteur pour chaque évènement de la suite d'évènements que le véhicule est amené à rencontrer sur son itinéraire, en réalisant une mise à jour récurrente similaire aux mises à jour des données traitées utilisées par l'interface de compilation 4.

Tel qu'illustré sur la figure 1, le système d'assistance à la conduite 1 comprend également un dispositif de calcul des situations de surconsommation 12 déterminant et attribuant une valeur de surconsommation à chacun des évènements de la suite d'évènements en fonction de la vitesse effective du véhicule. Cette valeur de surconsommation est ensuite utilisée par l'interface de gestion 8 pour prioriser les évènements d'une suite d'évènements, en combinaison avec les distances d'alerte au conducteur précédemment évoquées.

Le dispositif de calcul des situations de surconsommation 12 détermine cette valeur de surconsommation pour chaque évènement de la suite d'évènements en prenant en compte la distance d'alerte au conducteur, la distance séparant la position du véhicule de l'évènement et la distance de décélération du véhicule. Pour un évènement donné, lorsque la distance d'alerte au conducteur est supérieure ou égale à la distance séparant le véhicule de l'évènement, c'est-à-dire lorsque le véhicule a déjà dépassé la zone à partir de laquelle le conducteur devrait lever le pied pour réaliser un freinage optimisé, et lorsque la distance de décélération associée à cet évènement est non nulle, c'est-à-dire lorsqu'il a été envisagé par l'algorithme qu'une décélération naturelle du véhicule est possible pour atteindre la vitesse cible associée à l'évènement, le dispositif de calcul des situations de surconsommation attribue une première valeur non nulle, telle que par exemple « 1 », à la valeur de surconsommation. Sinon, le dispositif de calcul des situations de surconsommation attribue une deuxième valeur nulle, telle que par exemple « 0 », à la valeur de surconsommation.

Selon l'invention, l'interface de gestion 8 organise chacun des évènements de la suite d'évènements générée par l'interface de compilation 4 selon leur distance d'alerte au conducteur calculée par le calculateur 6.

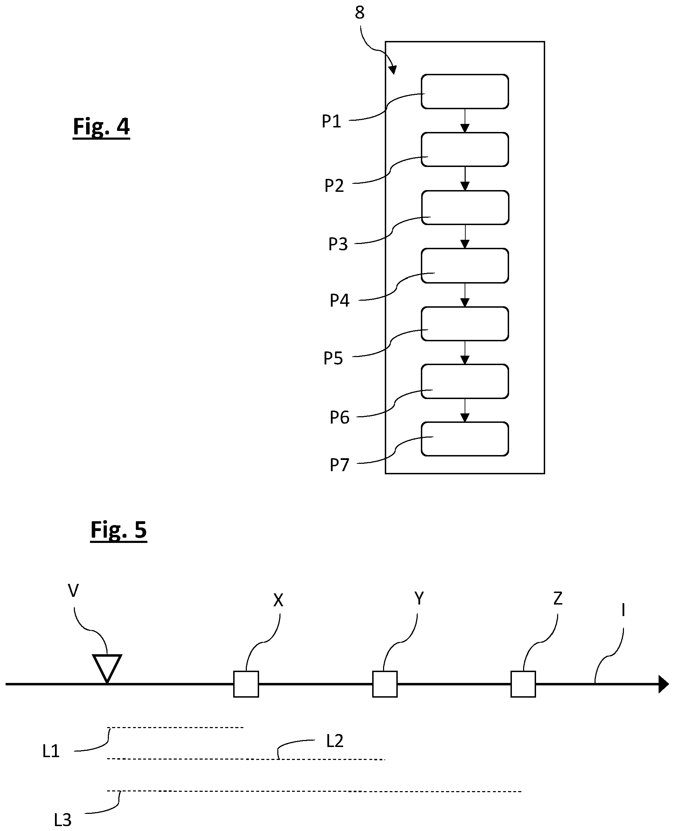

Tout d'abord et en référence à la figure 4, l'interface de gestion 8 trie l'ensemble des évènements de la suite d'évènements pour les regrouper dans une première catégorie, une deuxième catégorie ou dans une troisième catégorie.

Pour cela, l'interface de gestion est configurée pour réaliser une phase de présélection P1 durant laquelle l'interface de gestion 8 attribue une partie des évènements de la suite d'évènements à la première catégorie. La première catégorie comprend les évènements de la suite d'évènements auxquels est associée une distance de freinage nulle. De plus, le premier évènement de la suite d'évènements auquel est associé une distance de freinage non nulle est également attribué à la première catégorie.

L'interface de gestion 8 est par ailleurs configurée pour réaliser une phase de tri P2 durant laquelle certains des évènements attribués préalablement à la première catégorie sont assignés à la deuxième catégorie. La phase de tri P2 consiste notamment à calculer une distance entre un évènement et la position effective du véhicule et à comparer cette distance calculée avec la distance d'alerte au conducteur associé à l'évènement. Les évènements sont assignés à la deuxième catégorie lorsque la distance calculée est inférieure à la distance d'alerte au conducteur.

Ensuite, l'interface de gestion 8 comprend une phase de sélection P3 durant laquelle l'interface de gestion 8 sélectionne, en fonction des distances de décélération, un unique évènement parmi les événements assignés à la deuxième catégorie lors de la phase de tri P2, cet unique évènement étant désigné comme l'évènement sélectionné. Plus particulièrement, l'évènement sélectionné correspond à l'évènement assigné à la deuxième catégorie dont la distance de décélération est la plus importante.

A la suite de la réalisation de cette phase de sélection P3, l'interface de gestion 8 est configurée pour réaliser une phase de détermination P4 durant laquelle l'interface de gestion 8 attribue un évènement à la troisième catégorie. Cet évènement attribué à la troisième catégorie correspond à l'évènement qui précède, selon l'ordre d'apparition le long de l'itinéraire que doit emprunter le véhicule, l'évènement sélectionné assigné à la deuxième catégorie durant la phase de sélection P3 et dont la valeur de surconsommation attribuée par le dispositif de calcul des situations de surconsommation est égale à la première valeur, c'est-à-dire à une valeur non nulle, telle que « 1 » par exemple.

Enfin, l'interface de gestion 8 est configuré pour réaliser une phase de priorisation P5 durant laquelle elle détermine l'évènement mis en priorité parmi les évènements des deuxième et troisième catégories, cet évènement étant déterminé comme celui ayant la vitesse cible la plus basse, c'est à dire l'évènement pour lequel la vitesse à laquelle doit circuler le véhicule au moment de franchir l'évènement présente la valeur la plus basse. Lorsque la vitesse cible de l'évènement de la deuxième catégorie est égale à la vitesse cible de l'évènement de la troisième catégorie, l'interface de gestion 8 choisit comme évènement mis en priorité par défaut l'évènement de la troisième catégorie.

Dans certaines situations de roulage, la première catégorie, la deuxième catégorie et la troisième catégorie ne comprennent pas d'évènements, comme par exemple lorsqu'aucun des évènements de la suite d'évènements ne comprend de distance d'alerte au conducteur inférieure à la distance entre la position du véhicule et l'évènement. L'interface de gestion ne détermine alors pas de priorité entre les évènements.

Il convient de noter que le véhicule peut être amené à changer d'itinéraire lorsqu'il roule. Dans ce cas-là, les données brutes de navigation récoltées par le système de récupération 2 sont mises à jour, entraînant une mise à jour des données traitées reçues par l'interface de compilation 4, des distances d'alerte au conducteur calculées par le calculateur 6 et ainsi de la priorisation réalisée par l'interface de gestion.

Pour permettre une meilleure compréhension de l'invention et notamment de la détermination de l'évènement mis en priorité par l'interface de gestion, on va maintenant décrire un cas pratique en référence à la figure 5. Ce cas pratique met en avant ici un exemple d'application non limitatif de l'invention.

Un itinéraire d'un véhicule est représenté par une flèche I sur laquelle la position du véhicule V est représentée par une forme triangulaire. L'itinéraire choisi que doit emprunter le véhicule comprend ici une suite d'évènements comprenant trois évènements X, Y et Z. Le premier évènement X est situé à une première distance L1 de deux cents mètres (200 m) de la position du véhicule V. Le calculateur a calculé une distance d'alerte au conducteur du premier évènement X de deux cents mètres (200 m) et une distance de freinage nulle, et l'interface de compilation a attribué une vitesse cible de soixante-dix kilomètres par heure (70 km/h) au premier évènement X. La distance d'alerte au conducteur correspond, pour rappel à la distance entre l'évènement et la position du véhicule au moment où le conducteur est informé qu'il peut lever le pied de la pédale d'accélération, la vitesse cible correspond à la vitesse à laquelle doit rouler le véhicule lorsqu'il franchit l'évènement et la distance de freinage correspond à la distance durant laquelle le conducteur utilise la pédale de frein du véhicule.

Le deuxième évènement Y est situé à une deuxième distance L2 de quatre cents mètres (400 m) de la position du véhicule V. Le calculateur a calculé une distance d'alerte au conducteur du deuxième évènement Y de cinq cents mètres (500 m) et une distance de freinage de cinquante mètres (50 m), et l'interface de compilation a attribué une vitesse cible de cinquante kilomètres par heure (50 km/h) au deuxième évènement Y.

Le troisième évènement Z est situé à une troisième distance L3 de mille quatre cents mètres (1400 m) de la position du véhicule V. Le calculateur a calculé une distance d'alerte au conducteur du troisième évènement Z de trois cents mètres (300 m) et une distance de freinage de trente mètres (30 m), et l'interface de compilation a attribué une vitesse cible de cinquante kilomètres par heure (50 km/h) au troisième évènement Z.

L'interface de gestion commence par réaliser la phase de présélection P1 en déterminant si les évènements X, Y et Z peuvent être attribués dans la première catégorie, cette dernière comprenant les évènements de la suite d'évènements présentant une distance de freinage nulle et le premier évènement de la suite d'évènements comprenant une distance de freinage non nulle. L'interface de gestion attribue donc ici à la première catégorie le premier évènement X, cet évènement comprenant une distance de freinage nulle, et le deuxième évènement Y, cet évènement étant le premier évènement comprenant une distance de freinage.

Lors de la phase de tri P2, l'interface de gestion assigne à la deuxième catégorie le deuxième évènement Y, car la deuxième distance L2 est inférieure à la distance d'alerte au conducteur du deuxième évènement Y.

L'interface de gestion détermine ensuite lors de la phase de sélection P3 l'évènement sélectionné de la deuxième catégorie correspondant à l'évènement dont la distance de décélération est la plus importante. Ici, la deuxième catégorie ne comprend que le deuxième évènement Y, de sorte que ce dernier est donc l'évènement sélectionné par l'interface de gestion.

L'interface de gestion détermine ensuite l'évènement de la troisième catégorie lors de la phase de détermination P4. Cet évènement correspond à l'évènement qui précède, par rapport à la position du véhicule, l'évènement sélectionné assigné à la deuxième catégorie durant la phase de sélection P3, l'évènement sélectionné étant ici le deuxième évènement Y. Le dispositif de calcul des situations de surconsommation calcule ensuite la valeur de surconsommation de l'évènement qui précède l'évènement sélectionné, c'est-à-dire ici le premier évènement X. La valeur de surconsommation du premier évènement X est ici une valeur non nulle, telle que « 1 » par exemple, de sorte que l'évènement attribué à la troisième catégorie est ici le premier évènement X.

L'interface de gestion détermine ensuite l'évènement mis en priorité lors de la phase de priorisation P5, cet évènement étant déterminé, pour rappel, comme celui ayant la vitesse cible la plus basse, cette vitesse cible correspondant à la vitesse à laquelle doit circuler le véhicule au début de l'évènement. Lorsque la vitesse cible de l'évènement de la deuxième catégorie est égale à la vitesse cible de l'évènement de la troisième catégorie, l'interface de gestion choisit comme évènement mis en priorité par défaut l'évènement de la troisième catégorie.

Ici, la vitesse cible du deuxième évènement Y est inférieure à la vitesse cible du premier évènement X de sorte que l'interface de gestion priorise le deuxième évènement Y.

Tel qu'illustré sur la figure 1, le système d'assistance à la conduite 1 comprend au moins un moyen d'alerte 14 au conducteur qui, une fois que l'évènement mis en priorité est déterminé par l'interface de gestion 8 du système d'assistance à la conduite 1, va informer le conducteur quant à la possibilité de pouvoir lever le pied de la pédale d'accélération en amont de l'évènement mis en priorité. Ce moyen d'alerte 14 au conducteur peut être par exemple un dispositif d'émission d'un signal sonore par exemple.

Selon un mode de réalisation alternatif ou complémentaire, le système d'assistance à la conduite 1 comprend un dispositif d'affichage de la distance d'alerte au conducteur permettant ainsi au conducteur de visualiser les distances d'alerte au conducteur sur une carte par exemple ou encore d'afficher un logo « attention » (ou « warning » en anglais), voire un logo informant le conducteur du type d'évènements à venir.

Selon un autre mode de réalisation alternatif ou complémentaire, le système d'assistance à la conduite 1 comprend un moyen de communication de la distance d'alerte avec un dispositif d'affichage du véhicule et/ou du dispositif de navigation. Ainsi et selon un exemple non limitatif de l'invention, le système d'assistance à la conduite émet via son moyen de communication une instruction de commande au dispositif d'affichage du véhicule et/ou du dispositif de navigation 10, cette instruction de commande obligeant ledit dispositif d'affichage à afficher la distance d'alerte au conducteur, de sorte que le conducteur puisse visualiser les distances d'alerte au conducteur.

Selon un autre mode de réalisation alternatif ou complémentaire et tel qu'illustré sur la figure 1, le véhicule 3 est autonome ou semi-autonome et comprend le système d'assistance à la conduite 1 et un module de contrôle 15 du pilotage du véhicule étant apte à émettre des instructions de commande de décélération du véhicule, ledit système d'assistance à la conduite comprenant un dispositif de communication 17 configuré pour émettre une information en direction du module de contrôle de pilotage 15.

L'invention concerne également un procédé d'assistance à la conduite 1 optimisant la consommation d'énergie électrique et/ou thermique d'un véhicule. Durant ce procédé, le système d'assistance à la conduite 1 calcule une distance d'alerte au conducteur pour chaque évènement d'une suite d'évènements à partir de données brutes de navigation d'un système de navigation 10. L'interface de gestion 8 du système d'assistance à la conduite 1 priorise ensuite chaque évènement selon leur distance d'alerte au conducteur et l'occurrence de la zone de déclenchement de cette distance d'alerte par rapport au véhicule à un instant T. Le système d'assistance à la conduite 1 communique par la suite la distance d'alerte au conducteur de l'évènement mis en priorité audit conducteur pour l'inciter à décélérer en fonction des évènements présents sur l'itinéraire déterminé par le système de navigation 10 et ainsi optimiser la consommation en énergie du véhicule.

Ce procédé d'assistance à la conduite comprend une première étape durant laquelle le système de récupération 2 des données du système d'assistance à la conduite communique avec le système de navigation 10 pour récupérer des données brutes de navigation concernant l'itinéraire choisi par le système de navigation 10. Le système de récupération traite ces données brutes de navigation pour former des données traitées, ces dernières étant ensuite envoyées à l'interface de compilation 4. L'interface de compilation 4 crée, à partir des données traitées, au moins une suite d'évènements.

Une deuxième étape de ce procédé d'assistance à la conduite consiste en ce que le calculateur 6 détermine la distance d'alerte au conducteur pour chacun des événements de la suite d'événements créée par l'interface de compilation 4. Durant cette deuxième étape, le calculateur 6 détermine d'abord la distance de décélération, la distance de freinage et la distance de réaction pour chacun des évènements pour ensuite calculer la distance d'alerte au conducteur de chacun des évènements de la suite d'évènements.

Le procédé d'assistance à la conduite comprend une troisième étape durant laquelle l'interface de gestion 8 priorise chacun des événements de la suite d'événements en fonction de la distance d'alerte au conducteur associée à chacun des événements et selon l'itinéraire prévu par le système de navigation 10 en optimisant la consommation en énergie du véhicule sur l'ensemble de l'itinéraire. Plus précisément et durant la troisième étape, un dispositif de calcul des situations de surconsommation 12 du véhicule du système d'assistance à la conduite 1 détermine une valeur de surconsommation, cette valeur de surconsommation étant ensuite utilisé par l'interface de gestion 8 pour déterminer l'évènement mis en priorité.

Le procédé d'assistance à la conduite comprend une quatrième étape durant laquelle le système d'assistance à la conduite 1 informe le conducteur pour qu'il décélère lorsqu'une décélération est nécessaire, notamment via le moyen d'alerte 14 au conducteur du système d'assistance à la conduite 1 et/ou le dispositif d'affichage du véhicule et/ou du système de navigation.

De plus, le procédé d'assistance à la conduite comprend une quatrième étape alternative durant laquelle le dispositif d'information de la distance d'alerte du système d'assistance à la conduite équipant un véhicule autonome ou semi-autonome communique avec le module de contrôle du véhicule autonome ou semi-autonome configuré pour émettre une instruction de commande de décélération au véhicule autonome ou semi-autonome.

## Revendications

1. Système d'assistance à la conduite (1) d'un véhicule automobile (3), ledit système comprenant au moins un système de récupération (2) de données de navigation, une interface de compilation (4) configurée pour créer au moins une suite d'évènements à partir des données de navigation récupérées et un calculateur (6) de distance d'alerte au conducteur, **caractérisé en ce que**
cette distance d'alerte au conducteur étant calculée, pour chacun des événements de chaque suite d'événements créée, en fonction d'au moins une distance de décélération naturelle du véhicule propre à chaque évènement, ledit système d'assistance à la conduite comportant en outre une interface de gestion (8) déterminant une priorité entre les événements de chaque suite d'évènements selon la distance d'alerte au conducteur calculée pour chaque événement.

2. Système d'assistance à la conduite (1) selon la revendication 1, comprenant un dispositif de calcul des situations de surconsommation (12) du véhicule configuré pour déterminer une valeur de surconsommation à chaque évènement.

3. Système d'assistance à la conduite (1) selon la revendication 2, dans lequel la valeur de surconsommation est apte à prendre soit une première valeur non nulle lorsque la distance d'alerte est supérieure ou égale à une distance entre la position d'un véhicule (3) et l'événement en approche et lorsque la distance de décélération est non nulle, soit une deuxième valeur nulle lorsque la distance d'alerte est inférieure à une distance entre le véhicule (3) et l'événement en approche et/ou lorsque la distance de décélération est nulle.

4. Système d'assistance à la conduite (1) selon l'une quelconque des revendications 2 ou 3, dans lequel l'interface de gestion (8) est configurée pour prioriser chacun des événements de la suite d'événements générée selon leur distance d'alerte au conducteur et selon leur valeur de surconsommation.

5. Véhicule (3) autonome ou semi-autonome comprenant un système d'assistance à la conduite (1) selon l'une quelconque des revendications précédentes et un module de contrôle (15) du pilotage du véhicule (3) étant apte à émettre des instructions de commande de décélération du véhicule (3), ledit système d'assistance à la conduite (1) comprenant un dispositif de communication (17) configuré pour émettre une information en direction du module de contrôle (15) de pilotage.

6. Procédé d'assistance à la conduite optimisant la consommation d'énergie électrique et/ou thermique d'un véhicule (3), durant lequel une distance d'alerte au conducteur pour chaque événement d'une suite d'événements est calculée par un système d'assistance à la conduite (1) selon l'une quelconque des revendications 1 à 4 à partir des données de navigation d'un système de navigation (10) puis transmise au conducteur pour l'inciter à décélérer selon les événements présents sur l'itinéraire et optimiser la consommation en énergie du véhicule (3), l'interface de gestion (8) priorisant chaque événement selon leur distance d'alerte.

7. Procédé d'assistance à la conduite selon la revendication 6, comprenant une première étape durant laquelle le système de récupération (2) des données communique avec le système de navigation (10) pour récupérer des données de navigation, puis transmet ces données de navigation à l'interface de compilation (4) pour qu'il crée au moins une suite d'événements à partir des données de navigation issues du système de navigation (10).

8. Procédé d'assistance à la conduite selon la revendication 7, comprenant une deuxième étape durant laquelle le calculateur (6) détermine une distance d'alerte au conducteur pour chacun des événements de la suite d'événements créée par l'interface de compilation (4).

9. Procédé d'assistance à la conduite selon la revendication 8, au cours duquel, durant la deuxième étape, le calculateur (6) détermine d'abord une distance de décélération, une distance de freinage et une distance de décélération pour chacun des événements, puis calcule ensuite la distance d'alerte au conducteur à partir des distances de décélération, de freinage et de réaction de chacun des évènements de la suite d'évènements.

10. Procédé d'assistance à la conduite selon l'une quelconque des revendications 8 ou 9, comprenant une troisième étape durant laquelle un dispositif de calcul des situations de surconsommation (12) du véhicule du système d'assistance à la conduite (1) détermine une valeur de surconsommation pour chaque évènement, l'interface de gestion (8) priorisant ensuite chaque évènement selon leur distance d'alerte au conducteur et leur valeur de surconsommation.

11. Procédé d'assistance à la conduite selon la revendication 10, comprenant une quatrième étape durant laquelle le système d'assistance à la conduite (1) informe le conducteur pour qu'il décélère lorsqu'une décélération est nécessaire.

12. Procédé d'assistance à la conduite selon la revendication 10, comprenant une quatrième étape alternative durant laquelle un dispositif de communication (17) du système d'assistance à la conduite (1) équipant un véhicule (3) autonome ou semi-autonome communique avec un module de contrôle (15) du pilotage du véhicule autonome ou semi-autonome configuré pour émettre une instruction de commande de décélération au véhicule (3) autonome ou semi-autonome.

## Patentansprüche

1. Fahrassistenzsystem (1) eines Kraftfahrzeugs (3), wobei das System mindestens ein Abrufsystem (2) von Navigationsdaten, eine Kompilierungsschnittstelle (4), die konfiguriert ist, mindestens eine Folge von Ereignissen ausgehend von den abgerufenen Navigationsdaten zu erzeugen, und einen Fahrerwarnabstand-Rechner (6) enthält,
**dadurch gekennzeichnet, dass** dieser Fahrerwarnabstand für jedes der Ereignisse jeder erzeugten Folge von Ereignissen abhängig von mindestens einem jedem Ereignis eigenen natürlichen Verzögerungsabstand des Fahrzeugs berechnet wird, wobei das Fahrassistenzsystem außerdem eine Verwaltungsschnittstelle (8) aufweist, die eine Priorität zwischen den Ereignissen jeder Folge von Ereignissen gemäß dem für jedes Ereignis berechneten Fahrerwarnabstand bestimmt.

2. Fahrassistenzsystem (1) nach Anspruch 1, das eine Vorrichtung zur Berechnung der Überverbrauchsituationen (12) des Fahrzeugs enthält, die konfiguriert ist, einen Überverbrauchswert bei jedem Ereignis zu bestimmen.

3. Fahrassistenzsystem (1) nach Anspruch 2, wobei der Überverbrauchswert entweder einen ersten Wert ungleich null, wenn der Warnabstand größer als ein oder gleich einem Abstand zwischen der Position eines Fahrzeugs (3) und dem sich nähernden Ereignis ist und wenn der Verzögerungsabstand ungleich null ist, oder einen zweiten Wert null annehmen kann, wenn der Warnabstand geringer ist als ein Abstand zwischen dem Fahrzeug (3) und dem sich nähernden Ereignis und/oder wenn der Verzögerungsabstand null ist.

4. Fahrassistenzsystem (1) nach einem der Ansprüche 2 oder 3, wobei die Verwaltungsschnittstelle (8) konfiguriert ist, jedes der Ereignisse der erzeugten Folge von Ereignissen gemäß ihrem Fahrerwarnabstand und gemäß ihrem Überverbrauchswert zu priorisieren.

5. Autonomes oder halbautonomes Fahrzeug (3), das ein Fahrassistenzsystem (1) nach einem der vorhergehenden Ansprüche und ein Kontrollmodul (15) des Lenkens des Fahrzeugs (3) enthält, das fähig ist, Anweisungen zur Verzögerungssteuerung des Fahrzeugs (3) zu senden, wobei das Fahrassistenzsystem (1) eine Kommunikationsvorrichtung (17) enthält, die konfiguriert ist, eine Information an das Lenkkontrollmodul (15) zu senden.

6. Fahrassistenzverfahren, das den Verbrauch elektrischer und/oder thermischer Energie eines Fahrzeugs (3) optimiert, während dessen ein Fahrerwarnabstand für jedes Ereignis einer Folge von Ereignissen von einem Fahrassistenzsystem (1) nach einem der Ansprüche 1 bis 4 ausgehend von den Navigationsdaten eines Navigationssystems (10) berechnet und dann an den Fahrer übertragen wird, um ihn zu veranlassen, gemäß den auf der Strecke vorhandenen Ereignissen zu verzögern und den Energieverbrauch des Fahrzeugs zu optimieren (3), wobei die Verwaltungsschnittstelle (8) jedes Ereignis gemäß ihrem Warnabstand priorisiert.

7. Fahrassistenzverfahren nach Anspruch 6, das einen ersten Schritt enthält, während dessen das Abrufsystem (2) der Daten mit dem Navigationssystem (10) kommuniziert, um Navigationsdaten abzurufen, dann diese Navigationsdaten an die Kompilierungsschnittstelle (4) überträgt, damit sie mindestens eine Folge von Ereignissen ausgehend von den vom Navigationssystem (10) stammenden Navigationsdaten erzeugt.

8. Fahrassistenzverfahren nach Anspruch 7, das einen zweiten Schritt enthält, während dessen der Rechner (6) einen Fahrerwarnabstand für jedes der Ereignisse der von der Kompilierungsschnittstelle (4) erzeugten Folge von Ereignisse bestimmt.

9. Fahrassistenzverfahren nach Anspruch 8, während dessen während des zweiten Schritts der Rechner (6) zunächst einen Verzögerungsabstand, einen Bremsabstand und einen Verzögerungsabstand für jedes der Ereignisse bestimmt, dann den Fahrerwarnabstand ausgehend von den Verzögerungs-, Brems- und Reaktionsabständen jedes der Ereignisse der Folge von Ereignisse berechnet.

10. Fahrassistenzverfahren nach einem der Ansprüche 8 oder 9, das einen dritten Schritt enthält, während dessen eine Vorrichtung zur Berechnung der Überverbrauchsituationen (12) des Fahrzeugs des Fahrassistenzsystems (1) einen Überverbrauchswert für jedes Ereignis bestimmt, wobei die Verwaltungsschnittstelle (8) anschließend jedes Ereignis gemäß ihrem Fahrerwarnabstand und ihrem Überverbrauchswert priorisiert.

11. Fahrassistenzverfahren nach Anspruch 10, das einen vierten Schritt enthält, während dessen das Fahrassistenzsystem (1) den Fahrer informiert, damit er verzögert, wenn eine Verzögerung notwendig ist.

12. Fahrassistenzverfahren nach Anspruch 10, das einen alternativen vierten Schritt enthält, während dessen eine Kommunikationsvorrichtung (17) des Fahrassistenzsystems (1), das in ein autonomes oder halbautonomes Fahrzeug (3) eingebaut ist, mit einem Kontrollmodul (15) des Lenkens des autonomen oder halbautonomen Fahrzeugs kommuniziert, das konfiguriert ist, eine Verzögerungssteueranweisung an das autonome oder halbautonome Fahrzeug (3) zu senden.

## Claims

1. Driver assistance system (1) for a motor vehicle (3), said system comprising at least a navigation data retrieval system (2), a compilation interface (4) configured to create at least one sequence of events from the navigation data retrieved and a computer (6) for calculating driver alert distance, **characterized in that** this driver alert distance is calculated, for each of the events of each sequence of events created, as a function of at least a natural deceleration distance of the vehicle specific to each event, said driver assistance system further comprising a management interface (8) determining a priority among the events of each sequence of events according to the driver alert distance calculated for each event.

2. Driver assistance system (1) according to Claim 1, comprising a device (12) for calculating situations of overconsumption of the vehicle configured to determine an overconsumption value on each event.

3. Driver assistance system (1) according to Claim 2, wherein the overconsumption value is capable of taking either a first non-zero value when the alert distance is greater than or equal to a distance between the position of a vehicle (3) and the approaching event and when the deceleration distance is non-zero, or a second zero value when the alert distance is less than a distance between the vehicle (3) and the approaching event and/or when the deceleration distance is zero.

4. Driver assistance system (1) according to either of Claims 2 and 3, wherein the management interface (8) is configured to prioritize each of the events of the sequence of events generated according to their driver alert distance and according to their overconsumption value.

5. Autonomous or semi-autonomous vehicle (3) comprising a driver assistance system (1) according to any one of the preceding claims and a vehicle (3) driving control module (15) capable of issuing vehicle (3) deceleration command instructions, said driver assistance system (1) comprising a communication device (17) configured to transmit information in the direction of the driving control module (15).

6. Driver assistance method optimizing the electrical and/or thermal energy consumption of a vehicle (3), during which a driver alert distance for each event of a sequence of events is calculated by a driver assistance system (1) according to any one of Claims 1 to 4 on the basis of the navigation data from a navigation system (10), then transmitted to the driver to prompt him to decelerate according to the events present on the route and to optimize the energy consumption of the vehicle (3), the management interface (8) prioritizing each event according to their alert distance.

7. Driver assistance method according to Claim 6, comprising a first step during which the data retrieval system (2) communicates with the navigation system (10) to retrieve navigation data, then transmits these navigation data to the compilation interface (4) so that it creates at least one sequence of events from the navigation data coming from the navigation system (10).

8. Driver assistance method according to Claim 7, comprising a second step in which the computer (6) determines a driver alert distance for each of the events of the sequence of events created by the compilation interface (4).

9. Driver assistance method according to Claim 8, in which, during the second step, the computer (6) first determines a deceleration distance, a braking distance and a deceleration distance for each of the events, and then calculates the driver alert distance from the deceleration, braking and reaction distances of each of the events of the sequence of events.

10. Driver assistance method according to either of Claims 8 and 9, comprising a third step during which a device (12) for calculating situations of overconsumption of the vehicle of the driver assistance system (1) determines an overconsumption value for each event, the management interface (8) then prioritizing each event according to their driver alert distance and their overconsumption value.

11. Driver assistance method according to Claim 10, comprising a fourth step during which the driver assistance system (1) tells the driver to decelerate when deceleration is necessary.

12. Driver assistance method according to Claim 10, comprising a fourth alternative step during which a communication device (17) of the driver assistance system (1) fitted to an autonomous or semi-autonomous vehicle (3) communicates with a control module (15) for controlling driving of the autonomous or semi-autonomous vehicle configured to transmit a deceleration command instruction to the autonomous or semi-autonomous vehicle (3) .
